# EUROPEAN PATENT APPLICATION

(11) **EP 3 054 690 A1**
(43) Date of publication of application: **10.08.2016**
(21) Application number: 16154048.9
(22) Date of filing: 03.02.2016
(51) Int. Cl.: H04N 21/2187, H04N 21/43, H04N 21/45, H04N 21/462, H04N 21/488, H04N 21/854

(54) **SYSTEM AND METHOD FOR GENERATING INSTANT STORYLINE FEED FOR LIVE SPORTING EVENT**

(30) Priority: 05.02.2015 US 201562112394 P
(71) Applicant: Illuminated Rocks Oy, 02170 Espoo (FI)
(72) Inventor: Suoknuuti, Marko, 02580 Siuntio (FI); Arponen, Jarmo, 02760 Espoo (FI); Hyytiäinen, Lauri, 01670 Vantaa (FI)
(74) Representative: Suominen, Kaisa Liisa

(57) **Abstract**

Disclosed is a system for generating at least one instant storyline feed of a live sporting event for a second screen, while the live sporting event is displayed on a first screen. The system includes a second screen server configured to receive information corresponding to at least one sporting event from an event production system, a result system and one or more external information sources. The second screen server is also configured to process the received information and create one or more indications based on the received information, the indications collectively form the instant storyline feed corresponding to the at least one live sporting event. The system also includes a second screen application executing on the second screen for receiving and displaying the one or more indications thereon.

## Description

### TECHNICAL FIELD

The present disclosure relates to provisioning of video services and related complementing services with second screen applications. Specifically, the invention relates to second screen applications for live sporting events where multiple concurrent video feeds of the sporting events are available.

### BACKGROUND

A second screen refers to the use of a computing device, such as a mobile device, tablet or Smartphone to provide an enhanced viewing experience for content on another device, such as a television. In particular, the term commonly refers to the use of such devices to provide interactive features during "linear" content, such as a television program, served within a special app or real-time video highlights on social networking apps such as Facebook and Twitter. Second screen applications are currently produced and edited by humans, and are highly tailored event specific services. These applications are optimized to specific use cases and have limited flexibility with what they can present. Their capabilities to react into instant and unexpected changes are limited. The instant and unexpected occurrences are common characteristics of live events and they are an important part of the viewing experience. Therefore, second screen applications for live events are required to have flexibility to react to instant and unexpected changes.

Generally, second screen applications are tied to one video service (event of program) so viewers need to use multiple apps to be able to follow different events from TV at the same time, which is inconvenient. Also, one event may distribute multiple streams from which the viewer can select what to watch. However, when there is no instant and reactive guiding available, it becomes difficult for the consumer to navigate and watch selections between the simultaneously offered streams.

One such existing second screen application is a real time application that determines which program is running on a TV set, however, it does not provide any guidance regarding what one should watch on the TV. Another service includes providing big data and data analysis from live sport events, and providing multi feed TV programming, for example, with Formula1 racing events through broadcasters, the viewer can select which camera feed he is watching. Yet another service includes promotion of time-based activities from TV, directing viewers to a variety of activities such as polls, votes, competitions, and winning prizes. This service provides interactive behaviour between viewers and TV program producers. However, it is not targeted to simultaneous multichannel TV program viewing and/or ad hoc, multifeed content streaming.

Therefore, in light of the foregoing discussion, there exists a need to overcome the aforementioned drawbacks of existing second screen applications, and making them suitable for live events.

### SUMMARY

The present disclosure seeks to provide a system for generating an instant storyline feed of a live sporting event for a second screen, while the live sporting event is displayed on a first screen.

In one aspect, an embodiment of the present disclosure provides a system for generating at least one instant storyline feed of a live sporting event for a second screen, while the live sporting event is displayed on a first screen, the system comprising:
a) a second screen server configured to:
   receive information from an event production system corresponding to at least one sporting event,
   receive information from a result system corresponding to the at least one sporting event,
   receive information from one or more external information sources corresponding to the at least one sporting event, and
   process the received information and create one or more indications based on the received information, wherein the indications, collectively form the instant storyline feed corresponding to the at least one live sporting event; and b) a second screen application executing on the second screen for receiving and displaying the one or more indications thereon.

In another aspect, an embodiment of the present disclosure provides a method for generating at least one instant storyline feed of at least one live sporting event for a second screen, while the at least one live sporting event is displayed on a first screen. The method comprise:
- receiving information from an event production system corresponding to at least one sporting event;
- receiving information from a result system corresponding to the at least one sporting event;
- receiving information from one or more external information sources corresponding to the at least one sporting event;
- processing the received information and create one or more indications based on the received information, wherein the indications, collectively form the instant storyline feed corresponding to the at least one live sporting event; and
- providing one or more indications on the second screen based on at least one user preference to form a filtered feed of indications.

Embodiments of the present disclosure substantially eliminate or at least partially address the aforementioned problems in the prior art, and provides a system for generating an instant storyline feed of a live sporting event for a second screen, while the live sporting event is displayed on a first screen.

Additional aspects, advantages, features and objects of the present disclosure would be made apparent from the drawings and the detailed description of the illustrative embodiments construed in conjunction with the appended claims that follow.

It will be appreciated that features of the present disclosure are susceptible to being combined in various combinations without departing from the scope of the present disclosure as defined by the appended claims.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those in the art will understand that the drawings are not to scale. Wherever possible, like elements have been indicated by identical numbers.

Embodiments of the present disclosure will now be described, by way of example only, with reference to the following diagrams wherein:
FIG. 1 is a schematic illustration of an exemplary environment wherein various embodiments of the present invention can be practiced;
FIG. 2 is a schematic illustration of a second screen server system, in accordance to an embodiment of the present disclosure;
FIGs. 3A, 3B and 3C are schematic illustrations of TV content consumption systems, Internet service systems, and event service systems, in accordance to an embodiment of the present disclosure;
FIGs. 4A-4E are schematic illustrations of first through fifth storyline structures, each hierarchically organising a storyline in case of a live event comprise multiple sub-events, in accordance to an embodiment of the present disclosure;
FIG. 5A is a schematic illustration of decomposition of a TV program into a storyline, in accordance to an embodiment of the present disclosure;
FIG. 5B is a schematic illustration of generation of content indications from the TV program, in accordance to an embodiment of the present disclosure;
FIG. 6A is an example of indication generation in a cross-country ski competition, in accordance to an embodiment of the present disclosure;
FIG. 7A is a schematic illustration of a service window for an event, in accordance to an embodiment of the present disclosure;
FIG. 8A is a schematic illustration of main elements of an indication timing process, in accordance to an embodiment of the present disclosure;
FIG. 8B is a schematic illustration of main elements of a query timing process, in accordance to an embodiment of the present disclosure;
FIG. 9A is an exemplary illustration of generation of a control indication when the viewer follows a single event, in accordance to an embodiment of the present disclosure;
FIG. 9B is a schematic illustration of generation of a control indication when the viewer follows a single event, in accordance to an embodiment of the present disclosure;
FIG. 9C is a schematic illustration of generation of a control indication when the viewer follows multiple events, in accordance to an embodiment of the present disclosure;
FIG. 10 is a schematic illustration of presentation of signals at the second screen, in accordance to an embodiment of the present disclosure;
FIG. 11 is a schematic illustration of a display of a second screen, in accordance to an embodiment of the present disclosure;
FIG. 12A is a schematic illustration of a signal sequence that the viewer has initiated by touching a signal specific control of the second screen, in accordance to an embodiment of the present disclosure;
FIG. 12B is a schematic illustration of a signal sequence that the viewer has initiated by touching a system control of the second screen, in accordance to an embodiment of the present disclosure;
FIG. 13A is a schematic illustration of a first signal viewing configuration in accordance to an embodiment of the present disclosure;
FIG. 13B is a schematic illustration of a second signal viewing configuration, in accordance to an embodiment of the present disclosure;
FIG. 14 is a schematic illustration of an event timeline for an example race;
FIG. 15 is a schematic illustration of source alternatives for an event production system related to an example race;
FIG. 16 is a schematic illustration of decision making steps of an event production system for an example race;
FIG. 17 is a schematic illustration of an example sequence to produce a television program for an example race; and
FIG. 18 is a schematic illustration of steps of a method for generating an instant storyline feed of at least one live sporting event.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible.

In one aspect, an embodiment of the present disclosure provides a system for generating at least one instant storyline feed of at least one live sporting event for a second screen, while the at least one live sporting event is displayed on a first screen, the system comprising:
a) a second screen server configured to:
   receive information from an event production system corresponding to at least one sporting event,
   receive information from a result system corresponding to the at least one sporting event,
   receive information from one or more external information sources corresponding to the at least one sporting event, and
   process the received information and create one or more indications based on the received information, wherein the indications, collectively form the instant storyline feed corresponding to the at least one live sporting event; and
b) a second screen application executing on the second screen for receiving and displaying the one or more indications thereon.

In another aspect, an embodiment of the present disclosure provides a method for generating at least one instant storyline feed of at least one live sporting event for a second screen, while the at least one live sporting event is displayed on a first screen. The method comprise:
- receiving information from an event production system corresponding to at least one sporting event;
- receiving information from a result system corresponding to the at least one sporting event;
- receiving information from one or more external information sources corresponding to the at least one sporting event;
- processing the received information and create one or more indications based on the received information, wherein the indications, collectively form the instant storyline feed corresponding to the at least one live sporting event; and
- providing one or more indications on the second screen based on at least one user preference to form a filtered feed of indications.

The at least one instant storyline feed in the present disclosure refers to one instant storyline feed or a group of instant storyline feeds. Thus, in the following, when the terms instant storyline feed or storyline feed or feed are used in singular, also plural is encompassed.

In an embodiment, the system of the present disclosure includes a user, and first and second screens associated with the user. The first screen may be a smart TV executing a smart TV software, or a media player application displaying live content. The second screen may be a display device executing a second screen application. Examples of the second screen include, but are not limited to, a personal computer, a laptop, a mobile phone, a smart-phone or any other device capable of data communication.

According to an embodiment, the indications comprise at least one of a content indication, a performance indication, an information indication, a control indication and a service indication. According to another embodiment, the second screen server is configured to generate at least one of the content indication, the performance indication, the information indication, the control indication and the service indication from a source point of the at least one live sporting event. According to a yet further embodiment, the data elements corresponding to at least one of location, view, identity and focus from the source point of the at least one live sporting event. With this respect, the focus can be for example an area or place on which the system is focused, while the identity is the identity of the person followed.

According to an embodiment, the system further comprises a second screen server system comprising the second screen server, the second screen application, system specific interfaces, and multitude of information sources. The system may yet further comprise a production module configured to produce signaling; and a delivery network configured to transport the signaling between a delivery module and second screen application, wherein the signaling includes signal envelopes that carry instances of objects between elements of the second screen server system. A system according to this description may also be such that the second screen application filters the one or more indications based on at least one user preference to form a filtered feed of indications, and renders the filtered feed of indications on the second screen. At least one user preference may comprise at least one of information about type of the at least one sporting event; information about credentials of the athlete, wherein the credentials include at least name, team and nationality of the athlete; and information about the source point of the at least one sporting event.

The second screen application creates a user interface on the second screen which allows the user to view video streams, control which video streams are shown on the first screen, view informative indications, etc. The second screen is communicatively coupled to a second screen server through a communication network. Examples of the communication network include, but are not limited to, a Local Area Network (LAN), a Wide Area Network (WAN), a Wi-Fi network and so forth.

The second screen server, hereinafter also referred to as TViiw server, is configured to derive TV programming related information, to create a live, instant storyline for a live event displayed on the first screen, and delivers the storyline to the second screen through the second screen application.

In an embodiment, the storyline is essentially a digital description of the event containing information related to the event, audio-visual production of the event and other direct or indirect information relevant to explain the event or to build emotions or drama for the viewers: names of athletes, their results etc. The storyline details are dependent on the subject sports. Logically, the storyline comprises objects, such as a single result of an athlete, standing of athletes, an estimation of the final results, a heads up of the estimated action, an information card of athlete, records or merits of the athlete, an availability of slow motion clip, or a performance compared to an estimation. The storyline essentially includes preferred highlights and related information, made available during the show, thus creating a personally customized interactive viewing experience.

The second screen server provides an instantly produced storyline of live event by which the viewer may personally control what audiovisual content one watch at the moment and, at the same time, be aware of actions on other simultaneous events (i.e., be virtually present in multiple events at the same time like in three ice hockey games). Secondly, the second screen server provides a mechanism of how the viewer can manage one or multiple simultaneous multi-feed streaming productions (e.g., simultaneous multi-feed productions from a cross-country skiing race, a ski jumping competition and two ice hockey games), and to get a completely personal and unique watching experience instantly tailored by the viewer's own preferences.

The second screen server thus creates unique, interactive TV watching experience by providing interactive information regarding the TV content and the complementing event/content related information that is not presented on the TV, wherein the presentation of the complementing information is based on the viewer's personal preferences. The second screen server allows an instant offering of interactive services that has an association with occurrences of the event and/or with presence on the TV content at the present moment.

In an embodiment, the second screen server fetches/receives information from a multitude of information sources for creating a live, instant storyline. Examples of such information sources include but are not limited to, an event production system, a timing/result system, a historical information system, a historical information database, and external information sources.

The event production system creates and distributes live audio-visual content to remote viewers such as people watching the event from TV or hand-held device. Such system include multiple cameras with known positions, multiple microphones, production equipment's like tools for selecting, editing and controlling audiovisual content, tools for adding overlay graphics on the audiovisual content and a control room equipment's for a director and production managers. The event production system essentially provides information about camera-stream mapping, camera positions, sub-event type (for example, in Olympic games there is a multitude of sporting events happening at the same time), information about the stream that is displayed on the first screen (display-stream mapping), etc.).

The timing/result system, also referred to as an event management system, manages the game or competition related information and actions. Such system includes a database of athletes including their identities and details, an event control system like main clock, performance measurement systems like time taking equipment's and sensors and a system/application that produces and manages race results or game statistics. The timing/result system provides information about split times, scoreboard, competitors, start order, name-number mapping, event related clock, event related location, etc.

The historical information system provides data from previously arranged competitions. Such data may be stored in the historical information database. The external information sources provide information regarding weather, wind, expert hints of commentators, etc, and can be used to further describe the storyline such as right owner's databases (for example, athlete personal information, records, merits, history, or rules), other information services (for example, news, blogs, feeds or social media), insiders' information (for example, coaches, commentators, or knowledge of experts of the sport in the question, tactics or strategies) or sponsors' information.

In an embodiment, the second screen server includes a rules database for describing the rules related to one or more live events, such as rules related to biathlon sport, such as total track length, split times, etc, and an event database for describing the event related details, for example a track profile of biathlon sport.

In another embodiment, the rules database describes the rules for other sports also which includes but not limited to triathlon, cross-country skiing, nordic combined, marathon, cross-country running, orienteering, motor sports, soccer, cricket, baseball, basketball, ice hockey, water sports, tennis, and track and field.

In operation, the second screen server retrieves source information from the external systems, processes the information and creates indication(s) with a specific type and with type related information elements. For example, the second screen server may receive information such as camera on live at the moment, logical guides to camera shooters, and directive guides to editing or overlay managers from the event production system, information such as arrival of athlete to a split time point with time, a turn of athlete in a long jump competition and ones' result from the timing/result system, and athlete's coach, personal or national records or address to own blog from external information systems.

A TV program has at least three levels of logic storyline layers: chapters, scenes and cuts. The most detailed storyline description and the highest frequency of the indications is at the cut level. Each cut comprises one or many recognizable items (such as an actor, an athlete, an article, or a location) that can be sources of information indications. Each indication has its own presentation structure and information elements. The indication type also defines which information elements are active, and which are passive. Each indication type has a layout that describes a presentation format of the indication on the second screen. The layout is either fixed or adaptive that can be changed instantly. The active elements react onto the viewer's touch, for example, by swapping the content on the main screen, query information about content on the main screen, request more information about element itself, activate utilization of the bound service, request a personally targeted offer, or request information about respective event. Then, the indication is encoded to a data format, such as a protocol data unit, PDU of delivery protocol. Finally, the encoded PDU of indication is inserted to a delivery queue to wait its transport turn, for delivering to the second screen application executing on the second screen. Before the flow is delivered, it is filtered according to user preferences thus creating a personal user experience. The filtering may happen at the second screen application, however it's necessary for the second screen server to know the user preferences. In addition to presenting indication, the second screen application offers system controls like setting preferences or browsing available events or flows.

In an embodiment, the indications include informative indications (for example, competitor X split time at 4.8 km is Y) and actionable indications (for example, competitor X is arriving soon at Finish, stream available in link Z). The second screen application receives the stream of indications from the second screen server, filters them based on the preferences of the user, (such as interest in biathlon, specifically athletes A, B and C).

In another embodiment, the event production system is configured to generate from each source point of the sporting event an independent indication flow. The independent indication flow can include content indications, performance indications of the athlete and other indications about data, results or service. For example, an athlete's turn in a long jump event results in two indications. Out of these two indications, one indication can be before the turn of the athlete and second indication can be the performance of the athlete after the long jump. Further, the viewer devices such as a tablet receive the independent indication flow and these devices renders the indication flow on the second screen. Furthermore, the viewer may select one or more source points (e.g. split time camera), one or more specific athletes, one or more specific event (such as goal scored, record broken) or a combination of these from the indication flow rendered on the second screen. Subsequently, the respective indications are rendered on the second screen based on the selected preference of the viewer.

The second screen application receives the flows (or sub-flows) that the viewer has selected in one's preferences. The viewer may follow one or multiple flows from one event or simultaneously several flows from multiple events (i.e., being aware of progress of several games at the same time). Indications are presented on the second screen and are shown there for a time that the viewer has selected in the application settings (for example, fast, steady, or slow) or until another indication arrives having an equal or higher preference.

In addition to the flow above, the second screen server delivers for each event, a flow description comprising one or more sub-flows, their types and indication types. The description comprises also layout information of the each indication type (e.g., a default layout or a custom layout) and number, space and positions of simultaneous indications (e.g., one full screen indication at time or four quarter screen indications with fix or own presentation frequencies). The flow description and the used indication types are event specifics and vary between sports (e.g., common types are used in more than one sport and custom types are specific for a certain sport).

In one embodiment, the indications include control indications which enables the user to switch from the storyline feed corresponding to the at least one live sporting event on the second screen to another storyline feed corresponding to the at least one live sporting event. For example, the second screen application commands the smart TV software to perform automatic channel switching. In practice, this means the user may receive an actionable indication i.e., the control indication which is rendered on the second screen as a graphical UI button, which - when activated - switches the content shown on the first screen into what is described in the actionable indication.

In an embodiment, the indication may have an associated action, such as changing video feed, or information retrieval on the athlete from the event production system. Further, a timestamp on indication rendering and delay before action is done and this information is recorded in the inquiry to be sent to the event production system. As a result, second server is configured to enable data retrieval to do contextual association with the content.

In addition, the event production system is configured to receive at least one spotting indication and replicating the at least one spotting indication. Further, the event production system is configured to provide the at least one spotting function, via the second server, on the second screen in a distinct indication flow. The distinct indication flow may be followed by the user. The embodiment enables the user to enable a crowd of followers to watch an event in a similar manner as some leader for example, a celebrity does.

In an example related to a live football event, when a goal is scored, the bookkeeping referee notes down time of the goal and the name of the person that scores the goal. This information is transferred to the timing/result system, and is further retrieved by the second screen server, for instantly forming part of the storyline created for the live football event.

In another example related to a live 10 km cross country skiing race event. In this race, each athlete skies two times 5 km track. Their starting interval is 30 sec. The winner is one that is the fastest skier. There are three split time points at 2 km, 5 km and 7 km. The results at split time points describe how the race develops e.g., who has been the fastest at 2 km point. The corresponding timing/result system captures time at five time points for every athlete (at start, 2 km, 5 km, 7 km and finish). Those times are further retrieved by the second screen server for forming a part of the storyline related to the cross country skiing race event.

In yet another example related to the TV program production, when a goal is scored, a director of the program production guides to shoot a narrow video from the goal maker, instructs to shoot a disappointed goalkeeper, run a slow motion clip from the kick and finally to run an overlay of game status (i.e., home 1 - visitor 0). Each of the transitions in the produced program content is a point that is further retrieved by the second screen server for forming a part of the storyline.

In yet another example related to multi-feed streaming production, each time taking points in cross country skiing (i.e., start, 2 km, 5 km, 7 km and finish) have their own feed production teams selecting and editing own audiovisual stream from the point. In this case, the audiovisual production of the race comprises these five independent time taking feeds and two other feeds such as audience feed and warm up feed. Transitions in the produced feeds are points that are further retrieved by the second screen server, for instantly forming part of the storyline, having multiple sub-storylines e.g., one per each feed.

In yet another example related to race analysis and predictions, the second screen server process athletes' results from different split points and notifies changes in the standings of different split time points (for example, new leader is at 2 km, an athlete has improved between 2 km and 5 km from position 12 to position 8), calculates new estimation of the race results when new split time result arrives, and calculates an estimation time when an athlete should arrive to her next split time point. These calculated notifications create race analyzing results and heads-ups, that become part of the storyline.

In yet another example related to race development, the second screen server notifies that there is a silent period in the race when there are no transactions nor predictions for occurrences soon, then the second screen server adds complementing information such as records of the current leader, sponsor of the leader, or ad of the sponsor from the external information systems.

In an embodiment, the second screen server, the second screen applications, system specific interfaces, and multitude of information sources, collectively form a second screen server system. The second screen server system includes a production module that produces signalling, a delivery network that transports the signalling between a delivery module and first through third second screen applications. The first through third second screen applications manage signalling and present the second screen services to consumers in consumer devices. The second screen server system further includes a system database that manages services related information, a spotting application that provides to experts a method to provide own signalling, a query module that manages an interaction with external information systems such as first, second and third internet search services.

In accordance with an embodiment, the signalling consists of signal envelopes that carry instances of objects between elements of the second screen server system. Each type of the signal envelopes enables a group of system functions. An action of the system function depends on objects with their specific attributes, signals that are exchanged between the elements/functions, and the elements involved into the action. The signal flows are a flexible set of signal envelopes that allow the second screen server system to adapt to various types of events and programs. The main principle in the event/program adaptation is that the signal envelopes are used regardless of the event/program in question and differences between the events/programs and their signalling needs are resolved within event/program specific objects carried in the attributes of the signals. A consequence of the envelope/object model is that there are no fixed sequences of the exchanged envelops that every event/program will follow, except few sequences of the system signalling that are common sequences. This also means that within the same event/program, two similar occurrences would not necessarily cause the same sequence of signalling. A signalling sequence at any given moment is unique.

The signalling envelopes form an application level protocol between elements of the second screen server system. Any reliable transport protocol can provide a transmission for the protocol, such as TCP over IP or HTTP tunneling. The interface elements of the second screen server system interact with the external systems with known means defined by the external systems, like HTTP, TCP over IP, or USB. An interaction between the second screen application and a first screen use a known method that the consumer device supports, such as IrDA or DLNA. If the first screen application is implemented on the consumer device, local API's of the consumer device can also be used.

In an embodiment, the envelope/object model is a flexible model to serve the various needs of events/programs, especially to serve live events/programs wherein occurrences and their details are hardly predictable. This capability, to handle instant occurrences well, is the main reason for the envelope/object model. The second screen server system is designed to be suitable for live events/programs and to serve also needs of the produced programs well.

The signalling principle is such that the second screen server system adapts into transactions in external systems. This is provided with an event driven state model wherein events in the external systems and viewers' reactions on the second screen application generate the most of the signalling between the end-points. Exceptional cases are produced programs and some sports which use known time intervals between transactions. In those cases, a part of the signalling can be time scheduled. The main purpose of the signalling principles is that the second screen server system can translate a storyline of the event/program into a produced flow of signal envelopes to which the viewer may instantly react and to manage ones' own watching experience with ones' own unique manner.

In an embodiment, the second screen server system further includes a first interface to TV content production systems, a second interface to TV content delivery systems, a content description database that provides storytelling information of the content, a third interface to event service systems, a fourth interface to the first internet search service, a fifth interface to the second internet search service, a sixth interface to the third internet search service, a service gateway to a fourth internet search service.

In an embodiment, the first through third second screen applications, include local databases that manages consumer's preferences and receiving capabilities and preferences of respective consumer devices. The local databases can be implemented in the delivery module, or the implementation could be shared between the delivery module and the first through third second screen applications.

In an embodiment, TV content consumption systems, Internet service systems, and event service systems are existing systems that offer relevant services and/or information that the second screen server system utilizes in its operations. The second screen system interacts with the TV content consumption systems, Internet service systems, and event service systems via system specific interfaces.

The TV content consumption system includes a TV content production system for creating one or more content streams using one or more camera sources, where the corresponding production process may be a live production or a production for time scheduled delivery. The TV content consumption system further includes a TV content delivery system sharing the produced content streams either in live or in time scheduled delivery to first through third consumer devices over first and second content delivery networks. Examples of the first and second content delivery networks include, but are not limited to, a broadcasting network, and content streaming networks over internet. The first through third consumer devices receive the TV content and present it to respective consumers.

The Internet service systems includes a front-end server that receives service requests through a network from a consumer application executing on a consumer device, processes the service requests using an application server and an information database. The consumer application creates consumer's requests, sends them to the corresponding front-end server, and waits for response from the front-end server. The application server runs one or many specific applications when generating a response to a consumer request.

The event service systems includes a timing system that measures action times of the event participants, an event scoreboard system that collects actions of the participants and maintains event results, a performance measurement/analysis system that receives information from various measurement or statistic systems and generates collected data objects or results of analysis, a participant database that manages information about participants, an event information system that manages complementing information about the event such as records, and results from previous events or other event history information, and a sponsor database that manages information related to event sponsors.

In an embodiment, the second screen server to define a rendering time for an indication to be provided on the second screen in accordance with a type of the indication and synchronization period for the indication with respect to the at least one live sporting event being displayed on the first screen. Accordingly, the second screen server is configured to render the indication on the second screen based on the rendering time.

In an example, the indication is rendered on the second screen prior to the at least one live sporting event being displayed on the first screen. In an alternate embodiment, the indication is rendered on the second screen during the at least one live sporting event being displayed on the first screen. In a yet another embodiment, the indication is rendered on the second screen after the at least one live sporting event being displayed on the first screen.

In an embodiment, the second screen server is configured to define priority for each indication and render the indication on the second screen in accordance with the priority of the indication. In an example, each indication has its own visibility time on the second screen. If a higher priority indication is received during a presentation of a lower priority indication, the presentation time of the lower priority indication can be shorten to get the higher priority indication visible on the second screen. In case, the lower priority indication is received during the presentation time of the high priority indication, the presentation of the low priority indication is postponed until the visibility time of the high priority indication is elapsed. Further, the second screen application running on the user device may enable the user to adjust priorities of different indications. The second screen application is configured to provide an interface to receive an input from the user regarding the priority for each indication.

According to an embodiment, the present method further comprises defining a rendering time for an indication to be provided on the second screen in accordance with a type of the indication and synchronization period for the indication with respect to the at least one live sporting event being displayed on the first screen; and rendering the indication on the second screen based on the rendering time. Rendering the indication on the second screen may for example comprise at least one of rendering the indication on the second screen prior to the at least one live sporting event being displayed on the first screen; rendering the indication on the second screen during the at least one live sporting event being displayed on the first screen; and rendering the indication on the second screen after the at least one live sporting event being displayed on the first screen. Rendering the indication during the at least one live sporting event may comprise for example rendering the indication after a respective cut or presentation moment, such as a scene or a chapter, in the stream of live sporting event being displayed on the first screen.

The method may still further comprise defining priority for each indication; and rendering the indication on the second screen in accordance with the priority of the indication. The method may also comprise receiving an input from the user regarding the priority for each indication, and possibly also receiving at least one spotting indication at the event production system; replicating the at least one spotting indication; and providing the at least one spotting function on the second screen in a distinct indication flow. In the latter case, a spotter application may run on a second screen of a user.

Following table below lists the relevant functions of the second screen server system, and corresponding methods:

| **System functions** | **Features** |
|---|---|
| P.100 | Produce a content indication impulse by |
| | • Interacting with event management systems |
| | • Interacting with video production systems |
| | • Processing received content information and producing a content indication |
| | • Delivering the content indication |
| P.110 | Present a content impulse to a viewer by |
| | • Comparing impulse attributes against the viewer's preferences and the viewer's device capabilities, and filtering out uncompliant impulses |
| | • Presenting the compliant impulses on the second application screen |
| | • Processing the viewer's reactions |
| | • Auto processing the impulse |
| P.110ci | Present a content impulse to a viewer in a manner same as that of the system function P.100 and by controlling the viewer's device with direct control methods |
| P.110cc | Present a content impulse to a viewer in a manner same as that of the system function P.100 and by controlling the viewer's device with cold control methods |
| P.110ch | Present a content impulse to a viewer in a manner same as that of the system function P.100 and by controlling the viewer's device with hot control methods |
| P.200 | Presents a query dialog to a viewer by |
| | • Collecting contextual details |
| | • Pre-processing query attributes |
| | • Creating attributes of the query |
| | • Selecting an anchor attribute/s |
| | • Sending a query request to the second screen server system |
| P.210 | Process a received query request by |
| | • Dividing the query for dedicated queries |
| | • Pre-processing dedicated query attributes |
| | • Sending dedicated query requests to query processing systems |
| P.230 | Process a group of responses for dedicated queries that relates to the same query request by |
| | • Post-processing query results |
| | • Creating attributes of query response |
| | • Sending the query response to the requesting viewer |
| P.240 | Present the combined response impulse to a viewer by |
| | • Presenting the response impulses on the second screen |
| P.300 | Produces an info indication impulse by |
| | • Interacting with event management systems |
| | • Interacting with video production systems |
| | • Interacting with information systems |
| | • Processing received information and producing an info indication |
| | • Delivering the info indication |
| P.310 | Presents an info indication impulse to a viewer by |
| | • Comparing impulse attributes against the viewer's preferences and the viewer's device capabilities, and filtering out uncompliant impulses |
| | • Presenting the compliant impulses on the second screen application |
| | • Processing the viewer's reactions |
| | • Auto processing the impulse |
| P.310m | Presents an info indication impulse to a viewer by |
| | • Collecting contextual details |
| | • Creating attributes of request |
| | • Sending a more information request to the second screen server system |
| P.400 | Process a more information request by |
| | • Processing the contextual attributes |
| | • Dividing the query for dedicated queries |
| | • Pre-processing dedicated query attributes |
| | • Sending dedicated query requests to query processing systems |
| P.420 | Process a group of responses for dedicated queries that relates to the same more information request by |
| | • Post-processing request results |
| | • Creating attributes of information response |
| | • Sending the information response to the requesting viewer |
| P.430 | Present the response impulse to the requesting viewer by |
| | • Presenting the response impulses on the second screen application |
| P.500 | Produce a service indication impulse by |
| | • Interacting with event management systems |
| | • Interacting with video production systems |
| | • Interacting with information systems |
| | • Interacting with service providing systems |
| | • Processing received service information and producing a service indication |
| | • Delivering the service indication |
| P.510 | Presents a service indication impulse to a viewer by |
| | • Comparing impulse attributes against the viewer's preferences and the viewer's device capabilities, and filtering out uncompliant impulses |
| | • Presenting the compliant impulses on the second screen |
| | • Processing the viewer's reactions |
| | • Auto processing the impulse |
| P.510m | Presents a service indication impulse to a viewer in a manner same as that of the system P.500 and by |
| | • Collecting contextual details |
| | • Creating attributes of request |
| | • Sending a more service request to the second screen server system |
| P.600 | Process a more service request by |
| | • Processing the contextual attributes |
| | • Dividing the service request for dedicated service requests |
| | • Pre-processing attributes of the dedicated service request |
| | • Sending dedicated service requests to service providing systems |
| P.620 | Process a group of service responses for dedicated service requests that relates to the same more service request by |
| | • Post-processing request results |
| | • Creating attributes of service response |
| | • Sending the service response to the requesting viewer |
| P.630 | Present the service response impulse to the requesting viewer by |
| | • Presenting the response impulses on the second screen application screen |
| P.700 | Process a viewer's reaction to service response by |
| | • Collecting contextual details, including the viewer's information and selection |
| | • Creating attributes of act service request |
| | • Sending the act service request to the second screen server system |
| P.710 | Process the act service request by |
| | • Processing a viewer's information and selection |
| | • Creating attributes of a service request |
| | • Pre-processing attributes of the service request |
| | • Sending the service request to a service providing system |
| P.730 | Process a service response by |
| | • Post-processing a service response |
| | • Creating attributes of a service response impulse, such as service confirmation or unique service identification |
| | • Sending the service response impulse to the requesting viewer |
| P.740 | Present the service response impulse for the requesting viewer by |
| | • Presenting the response impulses on the second screen application screen |
| | • Saving the unique service identification |
| P.800/X | Manages a service session by |
| | • Activating the service session with the service providing system |
| P.900 | Processing one or many spotting indication signal/s by |
| | • Receiving spotting indication signal from the spotting application |
| | • Creating and sending a spotting indication to the viewers |
| P.910 | Present the spotting indication impulse to a viewer by |
| | • Comparing impulse attributes against the viewer's preferences and the viewer's device capabilities, and filtering out uncompliant impulses |
| | • Presenting the compliant impulses on the second screen application |
| | • Processing the viewer's reactions |
| | • Auto processing the impulse |
| | • Controlling the viewer's device with control methods |
| P.1000 | Process a viewer's reaction to update option by |
| | • Creating attributes of an update request |
| | • Sending the update request to the second screen server system |
| | • Presenting a specific impulse with update option on the second screen application |
| P.1010 | Process the update request by |
| | • Updating values of the requested attributes |
| | • Creating a database request with the relevant attributes to a system database |
| P.1020 | Storage the relevant attributes to a system database by |
| | • Processing the database request, e.g., saving the values of the requested attributes |
| | Other relevant system fuctions include: |
| | • Processing received impulses and sorting them according to the viewer's preferences |
| | • Processing created impulses and sorting them according to the storytelling preferences of the event/program |
| | • Processing created impulses and sorting them according to a selected value/attribute of the impulse |
| | • Producing a collection from available contents |
| | • Processing storyline, screen play and casting documents and producing indications |
| | • Processing event manuscript and rule documents and producing indications |
| | • Processing information and service providing systems and producing indications |
| | • Processing instant information from event management systems and producing indications, such as indications from single actions of the event |
| | • Processing the instant information with known, such as performance measurement/analysis or statistical, and/or specific second screen server algorithms to producing indications |
| | • Processing information, including instant, from production systems and producing indications |
| | • Processing information, including instant, from information systems and producing indications |
| | • Processing information, including instant, from service systems and producing indications |
| | • Processing one or many spotting indication signal/s and producing indications |
| | • Processing a created impulse and selecting an anchor attribute/s |
| | • Processing a created impulse and adding contextual attribute/s |
| | • Saving an indication for scheduled delivery |
| | • Managing and maintaining information about available content |
| | • Instantly updating the information about available content |
| | • Processing the available information requests from the viewers |
| | • Managing a content switching in steps |
| | • Managing automatic and scheduled content switching |
| | • Managing descriptive and structural information of available content |
| | • Managing viewers' preferences and receiving capabilities |
| | • Managing local channel configurations |

The use cases below depict the potential use cases that could be implemented with the second screen server system.

### Use case I: My favourite skiers

In the current live programs, the editor selects what is displayed for viewing from a set of audio-video feeds. Several cameras are used to catch that is happening in a live competition. Such events have a timing system that keeps track on the start, split and finish times for every athlete. As the video feeds are readily available and content delivery to viewers can happen through Internet, event producers can easily provide several feeds to TV viewers as Internet video streams. For instance, in cross-country skiing, cameras are placed at least in start and in finish and in official split time points. There are tens of skiers in a single competition. The consumer may have a few favorites.

Through the second screen application executing on the second screens such as tablet, smart phones, the user may choose their favorite athletes, and also be informed about when their favorite is approaching a split time point (with available camera feed). The user may select a new audio/video feed with the app for showing on their first screen such as TV. The user may receive suggestion such as a prediction of the position which the athlete is competing at the present split time. Secondly, the suggestion may also include information of the athlete that is captured from athlete or other sport related databases. Alternatively, the suggestion may include an ID of the data that is used when the viewer requests the information from the database. Thirdly, the suggestion may also include a service ID into instantly offered services, such as commercial offers related to the athlete, to the present split time or to a position that the athlete has achieved at the split time.

### Use case II: My favourite actor/content/object/performance

Through the second screen application executing on the second screens such as tablet, smart phones, the user may receive suggestions based on the storyline of the produced TV program. In an example, the user may like to follow a preferred actor or scenes where an interesting content or object is visible. In this case the viewer may select the interesting elements of the program in a predefined list on the second screen application, to receive the related suggestions.

### Use case III: Interesting performance of athlete or team

When multiple video feeds are available from a single game, one competition or even from multiple simultaneously games, a method to select the most interesting performance become evident. Today, one can browse or zap between the feeds and try to select the most interesting feed at the present moment. During the event, timing and statistics collection systems capture information that can be further processed with known or dedicated algorithms to extract changes in the performance of athlete or team. This on time and instantly produced information can be used to provide control suggestions to the viewer.

An example of the performance analyses: In marathon competition at 30 km split time, one athlete is in 7th position 2 min 30 sec behind the leader and 1 min 43 sec behind the third runner. The athlete's running speed is 5 sec faster/km than the third runner and a speed of the third runner is decreasing. The second screen application may suggest to the user that there might be a tight competition between the third and the seventh runners about the 3rd place at the end of the race.

In a second example, the viewer watches games of football league. Three games are playing with scores: 0-0, 0-1 and 2-1. The viewer follows the 2-1 game as it has the most number of goals so far. In the second game, the home team switched two players. The performance statistics indicates that the home team play has improved a lot due to changes. The second screen application may suggest that the second game has the highest possibility for the next goal.

### Use case IV: I'm following the expert's Spottings

In many sports there are tactics, strategies or acts that are complex to process with computing algorithms and process into meaningful information, whereas experts of the sport have learned them and can comment and explain the hidden secrets of the sports for the viewers. This knowledge can also be used to provide control suggestions via the second screen application.

### Use case V: Amateur second screen server system

The viewer may also share own spotting via the spotting application with other users of the second screen application. When a group of viewers follow the same viewer, the followed viewer becomes an opinion leader (the Amateur second screen server system) for the followers. The opinion leader's spotting can be used to provide individual suggestions.

### Use case VI: I like to know more

In many sports, athletes perform at the same time in different places or with time intervals. Usually TV production selects which one of the simultaneous performers will be presented on the program. The choice may not be the one that the viewer would choose. Therefore single video feed cannot cover interests of all viewers. When multiple streams from the event become available, the viewer may instantly select what to watch.

The event owner may share more event related information such as on-line results, on e.g., web pages of the event. However, the pages are not updated in real-time or in close to real-time. Therefore, the offered information is less useable for the viewer to help in selecting what to watch or know more about an object in the present scene that the viewer is currently watching. This event related information that is available for other means, can be instantly shared either in embedded object of the suggestion or in a dedicated information object of the second screen application. The viewer may react into the offered object and get more data about the matter or, further, receive a related service offer.

### Use Case VII: Give me an answer

Sometimes the viewer sees an interesting object/matter/person on a present moment of the program, which activates the viewer's interests to know more about the interesting instance. Generally, the viewer can make a query to internet search services and browse the results. However the common query dialogs would not include nor offer a method to add a moment of the program nor the context of the event in a live program into the query. Therefore, an accuracy of the search results varies and in some cases the user may not even receive response to the original query as the query would not include the context. By adding the contextual information into the query, the viewer gets more accurate results.

### Use Case VIII: I benefit with the personally targeted offer

One type of known digital services is sponsoring of the sport via having ad placements on the scene. Similarly, TV program may break for commercials or has product placements as embedded ads. These traditional means of sponsoring and advertising in TV content are less competitive with more targeted internet advertising methods. It is known that second screen applications may provide ads or extend the presented ads on TV program with additional services presented on the second screen app.

In a sport event, sponsoring has been implemented with agreed means and methods, for example, there can be printed ads on the background of the scene that are present on the TV content or they can be specific ad screens with dynamically changing ads. This principle can be translated on the screen of the second screen app as well, i.e., there may be specific ad spaces on the screen. There are multiple known methods on how the ad space can be filled with ads, like fixed, randomly selected, or circulated ads. In the second screen server system, the ad spaces in second screen application are filled with specific methods which combine contextual information of the event and the viewer's preferences with the occurrence that triggers the advertising. The ad space can be filled with fixed ad or with interactive offer, which can be further targeted with an interaction sequence between the second screen server system and the viewer.

### Use Case IX: I use the offer later

In many cases, the viewer likes to mainly focus on watching and tends to ignore ads or product placements at the watching moment. Still, the viewer may record the most interesting offerings and try to catch them up in the later moment. Success on the later act is dependent on what the viewer remembers or on a quality of the notes taken when the ad was presented on the screen. The instantly presented object on the second screen with contextual information can be saved and used later in search or management of the saved objects.

### Use Case X: Whom/What can I watch on TV now

Traditional TV content consists of channels and programs. Nowadays, channels and programs are transforming to program streams consisting of multiple video feeds. In this environment, the viewer needs another level of content guiding to discover preferred content from an ocean of available video feeds. This is even more demanding with live content where pre-created storyline would not describe the content. In sport event, adhoc content breeds instantly e.g., a goal in football game.

### Use Case XI: Fill the less interested moment

In many sport telecasts, there are periods that almost nothing or very little interesting actions actually happens in the event, like time for break in ice hockey, half time in football or a silent period between split point events in cross-country skiing. Duration of these periods may be known but actual starting and ending times could be unknown or the periods occur without knowing in advance. These periods could be filled with more interesting content that are created in advance like interviews of athletes or discussions between experts. The second screen server system offers a specific signalling for the viewer to manage these periods and fill the moment with alternative available content.

The table below describes few illustrative signalling examples from each use case. The examples below are illustrative and would not represent the one and only outcome how the second screen server system would signal in the similar kind of occurrences at another instances in the same event/program, or in the cases of another events/programs.

| **S.No** | **Use case** | **Illustrative signaling example** |
|---|---|---|
| I | My favorite skiers | • Viewer likes to follow the favorite athlete and sends via the second screen application, an update request with an athlete identification in the attributes |
| | | • Interface to event timing system generates a content indication when the athlete starts or crosses the previous spilt time point with the result in the attributes |
| | | • The second screen server system generates a content indication when the athlete should reach the next split time point or the finish line with expected arrival time in the attributes |
| | | • The second screen server system generates a content indication close to the expected arrival time with the remaining time and control option in the attributes |
| | | • Viewer reacts into the control indication and starts to follow a video feed from the indicated split time point |
| | | • Interface to event timing system generates a content indication when the athlete starts or crosses the previous spilt time point with the result in attributes. The indication includes additional information in the attributes such as a predicted position of the athlete in the competition, athlete identification or embedded service identification |
| | | • Viewer reacts into the content indication and the additional attributes by e.g., more information request or more service request with the received additional attributes in the attributes of the request |
| II | My favorite actor/content/ object/perfor mance | • Viewer likes to follow the favorite actor and sends via the second screen application, an update request with an actor identification in the attributes |
| | | • The second screen server system generates a content indication when the favorite actor is visible next time in the followed program with a waiting time in the attributes |
| III | Interesting performance of athlete or team | • Interface to event timing system generates a content indication when the athlete crosses the spilt time point with a result information in the attributes |
| | | • The second screen server system generates a content indication that the competition about the third place is tight between two athletes |
| | | • The viewer reacts into the indication and send via the second screen application and update requests with follow the competition in the attributes |
| | | • The second screen server system generates frequent content indications with a time difference between the athletes in the attributes |
| III | Interesting performance of athlete or team | • Interface to event statistics system generates a content indication with players switching in the attributes |
| | | • The second screen server system generates a content indication with update in the game statistic and a cold swap control in the attributes |
| | | • The second screen server system generates a content indication with a goal in the air and a hot swap control in the attributes |
| | | • Viewer reacts into the control indication and starts to follow the video feed from the second game |
| IV | I'm following the expert's Spottings | • An expert of the specific sport activates the spotting app and starts to share ones' spots |
| | | • A viewer of the sport sends an information query with a request of available spot offerings in the attributes |
| | | • The second screen server system sends an information response with the available spotters in the attributes |
| | | • The viewer select one of the spotters and sends an update request with the selected spotter identification in the attributes |
| | | • The viewer starts to receive the spotting indications and may react to them |
| V | Amateur second screen server system | • A viewer activates the spotting application and starts sharing ones' spots |
| | | • Another viewer sends an update request with the spotting viewer identification in the attributes |
| | | • The another viewer starts to receive the spotting indications from the spotting viewer and may react to them |
| VI | I like to know more | • An athlete makes a leading results in the competition |
| | | • The second screen server system interacts with record databases and notifies that the result is the best of the season so far |
| | | • The second screen server system sends an information indication with the season's best result in the attributes |
| | | • The viewer notifies the indication and likes to review a list of the best results so far and sends a more information request with a best results in the attributes |
| | | • The second screen server system interacts with interfaces, collects the best results and sends an information response to the viewer with the best results in the attributes |
| VII | Give me an answer | • The viewer notices an interesting object on the program scene |
| | | • The viewer reacts and activates an information query from the second screen app |
| | | • The second screen app sends an information query with the scene object and program context in the attributes |
| | | • The second screen server system interacts with internal and/or external information systems, collects an answer to the query and sends an information response with the results in the attributes |
| | | • The second screen app presents the query results for the viewer |
| VIII | I benefit with the personally targeted offer | • A sponsor of the event likes to make a special offer for the event viewers if the season record is improved |
| | | • An athlete makes high score result |
| | | • The second screen server system recognizes that the new season record has been made |
| | | • The second screen server system sends a service indication with an offer object in the attributes |
| | | • A viewer reacts into the presented service indication and likes to utilize the offer. The second screen app sends a further service request with the offer and contextual information in the attributes |
| | | • The second screen server system process the further service request, collect a response and send the response with personally targeted offer in the attributes |
| | | • The viewer likes the offer and wants to instantly use it. The second screenapp sends an act service request with the targeted offer in the attributes |
| | | • The second screen server system process the request and send a response with a service processed confirmation in the attributes |
| IX | I use the offer later | • The viewer likes the received service offer but do not want to use it instantly. The second screen application sends the service request with the offer and a later use option in the attributes |
| | | • The second screen server system process the request and send a response with a service session identification in the attributes |
| | | • The second screen app presents the response and saves the service session identification |
| | | • At the time suitable for the viewer, the viewer activates the service usage in the second screen app |
| | | • The second screen app sends a services session request with the service session identification in the attributes |
| | | • The second screen app and the service gateway establish a service session and the process the identified service |
| X | Whom/What can I watch on TV now | • Interface to a content production system interacts with the production systems and collects available information of events and programs |
| | | • The interface updates the available information continuously |
| | | • A viewer likes to poll what kind of content is available now. The second screenapp sends an information query with the viewer's preferences in the attributes |
| | | • The second screen server system process the request and send an information response with an available content information in the attributes |
| | | • The second screen application presents the received information for the viewer |
| X | Whom/What can I watch on TV now | • A viewer updates one's watching preferences by sending an update request with the preferences in the attributes |
| | | • The second screen server system receives content availability signals from the interfaces continuously and indicates content availabilities by sending content indications to the viewers |
| | | • The viewer receives a content indication with event/program information in the attributes that match one's current interests, reacts to the indication and starts to watch the event/program |
| XI | Fill the less interested moment | • The second screen server system interacts with the event management system and detects a start of the half time |
| | | • The second screen server system sends a content indication with a half time start in the attributes |
| | | • The viewer reacts to the received indication and sends an update request indicating the end of half time in the attributes |
| | | • The viewer queries alternative content for the half time by sending an information query with highlights in the attributes |
| | | • The second screen server system process the request and send an information response with the available highlights information in the attributes |
| | | • The viewer picks the most interesting content and starts to watch it |
| | | • The second screen server system detects from the event management system that the half time is getting to the end |
| | | • The second screen server system sends a content indication with start of the second period and content control in the attributes |
| | | • The viewer reacts to the indication, switch to the primary game and starts to watch the second period of the game |

### DETAILED DESCRIPTION OF THE DRAWINGS

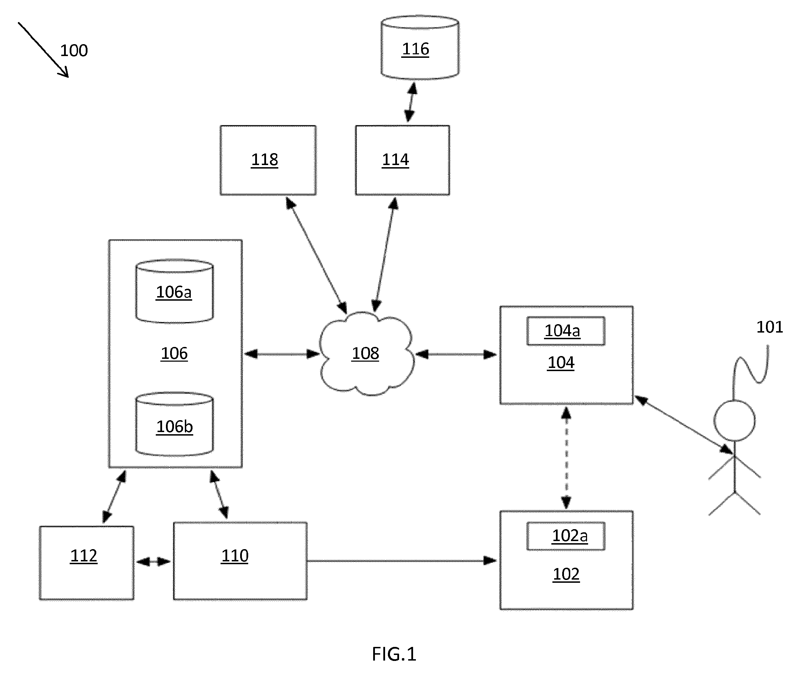

Referring now to the drawings, particularly by their reference numbers, FIG. 1 is a schematic illustration of an exemplary environment **100** for practicing an embodiment of the present disclosure. The environment **100** includes a user **101,** first and second screens **102** and **104** associated with the user **101.** The first screen **102** may be a TV executing a smart TV software **102a,** and the second screen **104** may be a mobile communication device executing a second screen application **104a** for creating user interface on the second screen **104.** The second screen **104** is communicatively coupled to a second screen server **106** through a communication network **108.**

The second screen server **106** is configured to derive TV programming related information, create a live, instant storyline for a live event displayed on the first screen **102,** and delivers the storyline to the second screen **104** through the second screen application **104a.** The second screen server **106** includes a rules database **106a** and an event database **106b.** The rules database **106a** describes the rules related to one or more live events, and the event database **106b** describes the event related details.

The second screen server **106** fetches/receives information from a multitude of information sources for creating a live, instant storyline. Examples of such information sources include but are not limited to, an event production system **110,** a timing/result system **112,** a historical information system **114,** a historical information database **116,** and external information sources **118.**

The event production system **110** creates and distributes live audio-visual content to remote viewers. The event production system **110** provides to the second screen server **106,** information about camera-stream mapping, camera positions, sub-event type information about the stream that is displayed on the first screen **102.** The timing/result system **112,** also referred to as an event management system, manages the game or competition related information and actions. The result system **112** includes a database of athletes and provides information about split times, scoreboard, competitors, start order, name-number mapping, event related clock, event related location, etc. The historical information system **114** provides data from previously arranged competitions. Such data may be stored in the historical information database **116.** The external information sources **118** provide information regarding weather, wind, expert hints of commentators, etc.

In operation, the second screen server **106** receives information from the event production system **110,** the timing/result system **112,** the external information systems **118,** process the information, creates indications with specific type and with type related information elements, and delivers the indications to the viewer, typically to the second screen **104** running the second screen application **104a.** Each indication has its own presentation structure and information elements. The indications may be filtered according to user preferences thus creating a personal user experience. In addition to presenting indication, the second screen application **104a** offers system controls like setting preferences or browsing available events or flows.

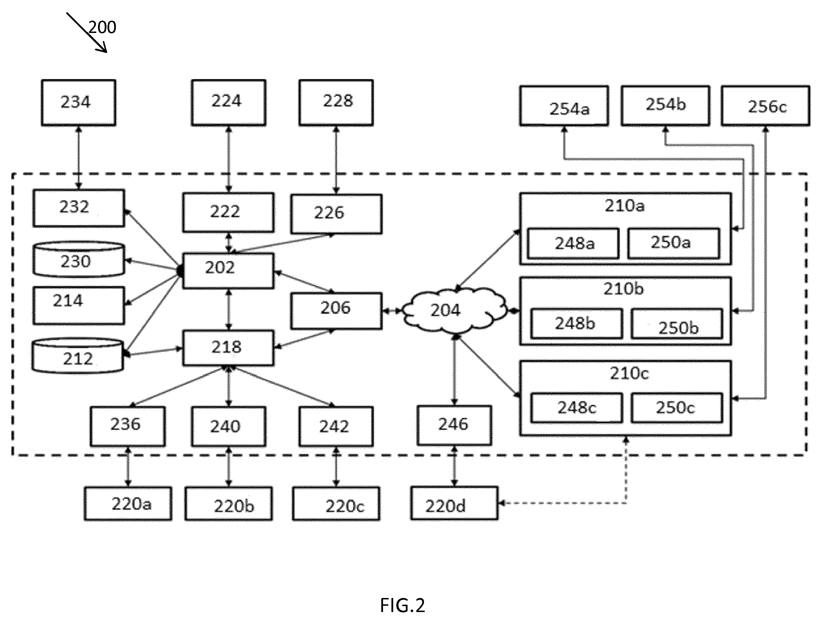

Referring now to FIG. 2, shown is a schematic illustration of a second screen server system 200, in accordance to an embodiment of the present disclosure. It is to be understood that, the second screen server system 200 is related to the environment 100, thereof.

The second screen server system **200** includes a production module **202** that produces signalling, a delivery network **204** that transports the signalling between a delivery module **206** and first through third second screen applications **210a** till **210c.** The first through third second screen applications **210a** till **210c** manage signalling and present the second screen services to consumers in consumer devices. The second screen server system **200** further includes a system database **212** that manages services related information, a spotting application **214** that provides to experts a method to provide own signalling, a query module **218** that manages an interaction with external information systems such as first, second and third internet search services **220a, 220b** and **220c.** The signalling consists of signal envelopes that carry instances of objects between elements of the second screen server system **200.**

The second screen server system **200** further includes a first interface **222** to TV content production systems **224,** a second interface **226** to TV content delivery systems **228,** a content description database **230** that provides storytelling information of the content, a third interface **232** to event service systems **234,** a fourth interface **236** to the first internet search service **220a,** a fifth interface **240** to the second internet search service **220b,** a sixth interface **242** to the third internet search service **220c,** and a service gateway **246** to a fourth internet search service **220d.**

The first through third second screen applications **210a, 210b** and **210c,** include local databases **248a, 248b** and **248c** that manages consumer's preferences respectively, and further include local databases **250a, 250b** and **250c** that manages receiving capabilities and preferences of respective consumer devices **254a, 254b** and **254c** respectively. In an embodiment, the local databases **248a-248c** and **250a-250c** can be implemented in the delivery module **206,** or the implementation could be shared between the delivery module **206** and the first through third second screen applications **210a-210c.**

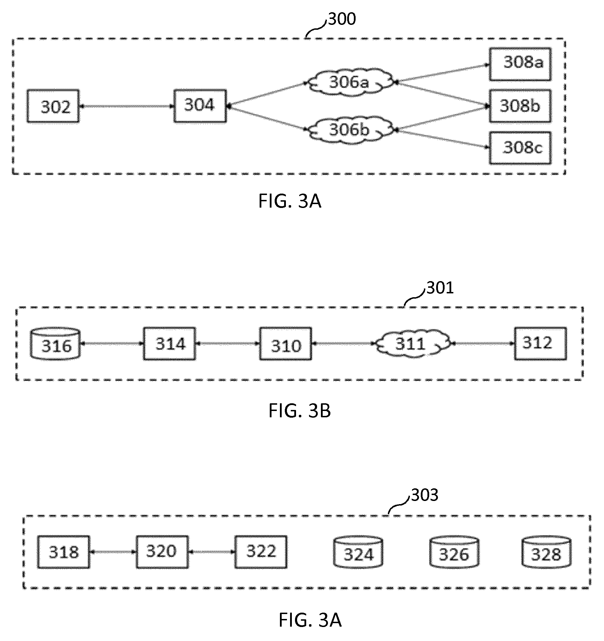

Referring now to FIGs. 3A, 3B and 3C, shown are illustrations of TV content consumption systems **300,** Internet service systems **301,** and event service systems **303,** respectively, in accordance with an embodiment of the disclosure.

The TV content consumption systems **300,** Internet service systems **301,** and event service systems **303** offer relevant services and/or information that the second screen server system **200** utilizes in its operations. The second screen server system **200** interacts with the TV content consumption systems **300,** Internet service systems **301,** and event service systems **303** via system specific interfaces.

The TV content consumption system **300** includes a TV content production system **302** for creating one or more content streams using one or more camera sources. The TV content consumption system **300** further includes a TV content delivery system **304** sharing the produced content streams either in live or in time scheduled delivery to first through third consumer devices **308a-308c** over first and second content delivery networks **306a** and **306b.**

The Internet service systems **301** includes a front-end server **310** that receives service requests through a network **311** from a consumer application **312** executing on a consumer device, processes the service requests using an application server **314** and an information database **316.** The consumer application **312** creates consumer's requests, sends them to the corresponding front-end server **310,** and waits for response from the front-end server **310.** The application **314** runs one or many specific applications when generating a response to a consumer request.

The event service systems **303** includes a timing system **318** that measures action times of the event participants, an event scoreboard system **320** that collects actions of the participants and maintains event results, a performance measurement/analysis system **322** that receives information from various measurement or statistic systems and generates collected data objects or results of analysis, a participant database **324** that manages information about participants, an event information system **326** that manages complementing information about the event such as records, and a sponsor database **328** that manages information related to event sponsors.

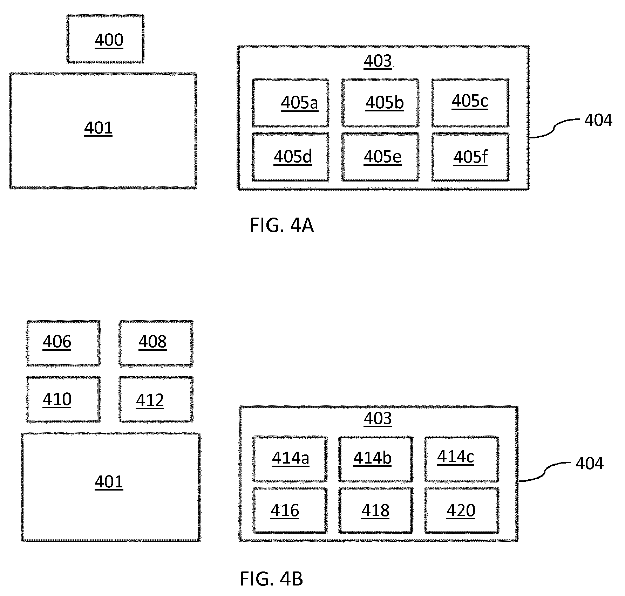

Referring now to FIGs. 4A-4E, shown are illustrations of first through fifth storyline structures, each hierarchically organising a storyline in case of a live event comprise multiple sub-events, in accordance to an embodiment of the present disclosure.

As illustrated in FIG. 4A, a user watches a sport event **400** on a linear TV **401** and uses a second screen application **403** on a tablet **404.** The corresponding second screen server system creates first through six indication flows **405a, 405b, 405c, 405d, 405e** and **405f** based on the sport event **400.** In an example, the sport event **400** is a cross-country skiing race with interval start having indication flows from start, three split time points (2km, 5km, 7km), finish and result standings.

As illustrated in FIG. 4B, a user watches a game **406** on the TV **401** and likes to watch power plays from other simultaneous games **408, 410,** and **412** too. The corresponding second screen application **403** on the tablet **404** receives indication flows **414a, 414b** and **414c** based on the game **406,** and flows of selected indications **416, 418,** and **420** from other simultaneous games **408, 410,** and **412** respectively. In an example, the viewer may receive a power play indication **416** for changing the existing TV channel to watch another game **408.**

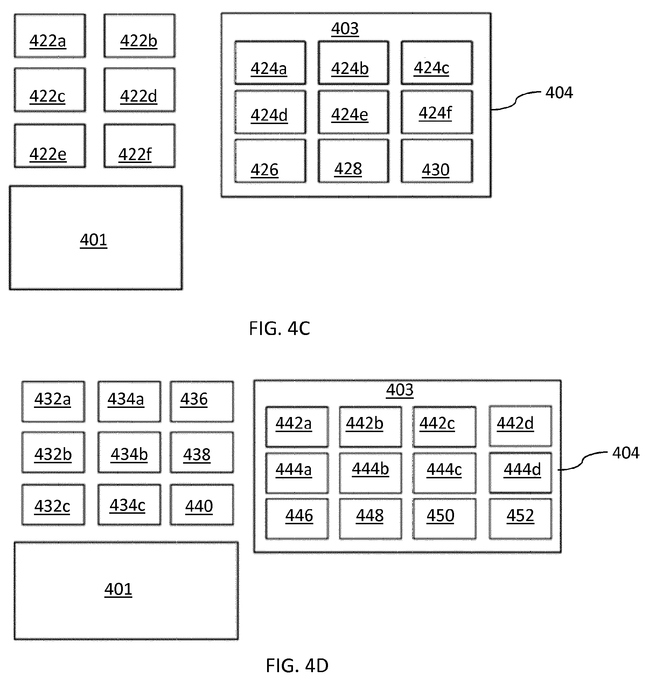

FIG.4C illustrates a multi-feed production use case of the second screen application service, wherein the viewer watches a sport event that delivers multiple produced and parallel audiovisual feeds **422a** till **422f** simultaneously. The viewer watches one of the available feeds **422a** on the TV **401** and uses the second screen application **403** on the tablet **404.** The second screen application **403** receives indication flows **424a-424f** based on audiovisual feeds **422a-422f** respectively. In an example, the sport event is a cross-country skiing race with interval start having content indication flows **424a-424f** from start, three split time points (2km, 5km, 7km), finish and from stadium respectively, and three complementing indication flows, result standings **426,** final results estimation **428,** and race analysis **430.** The viewer may, for example, follow the most interesting skier's from the start to the finish.

FIG. 4D illustrates a production use case of the second screen application service, wherein the viewer is virtually present on six sport events at the same time. The viewer may follow track and field competitions (track races, javelin and long jump) **432a-432c,** a golf tournament **434a -434c,** a weightlifting competition **436,** a boxing tournament **438,** and a marathon race **440** on the TV **401** (may also activate a pip or a mosaic watching), and uses the second screen application **403** on the tablet **400.** The second screen application **403** receives content indication flows **442a-442c,** and **444a-**444c based on the events **432a-432c,** and **434a-434c** respectively; and common information **442d,** event scheduling, **444d,** and game scoreboard. The second screen application **403** further receives indication flows **446, 448** and **450** based on the events **436, 438** and **440** respectively. It may also receive an indication flow **452** based an event which does not have audiovisual production available.

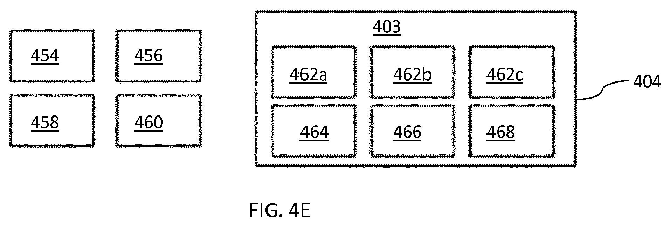

FIG. 4E illustrates a stadium use case of the second screen application service, wherein the viewer follows a race at a stadium. There are four main points of interest **454, 456, 458** and **460** on the stadium, where the viewer may focus. In an example, at a biathlon stadium, the point of interests are a large video screen **454** showing clips from split time points, start **456,** finish **458** and shooting area **460.** The second screen application **403** receives the first through sixth indication flows **462a, 462b, 462c, 464, 466** and **468.** The viewer follows the biathlon race via the second screen application **403** by following indications from each split time points **462a, 462b, 462c,** start **464,** finish **466** and shooting **468.** The viewer may focus watching at the point of interest, where their favorite athletes are performing at the moment.

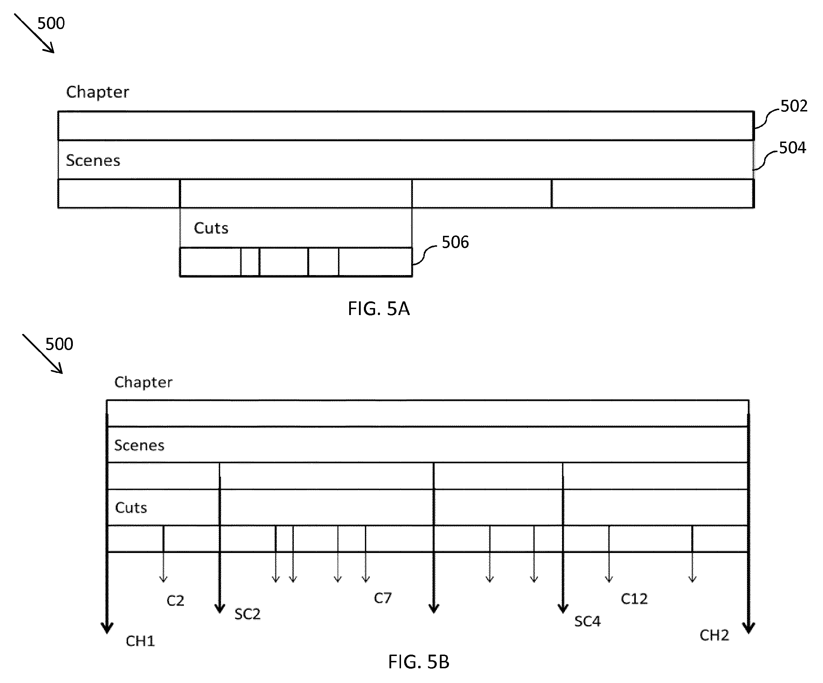

Referring now to FIG. 5A, an illustration of decomposition of a TV program **500** into storyline is shown, in accordance with an embodiment of the present disclosure. The TV program **500** has at least three levels of logic storyline layers: chapters **502,** scenes **504** and cuts **506.** The TV program **500** has multiple chapters **502,** where each chapter includes multiple scenes **504,** and each scene has multiple cuts **506.**

Referring now to FIG. 5B, shown is an illustration of generation of content indications from the TV program **500,** in accordance with an embodiment of the present disclosure. Each of the layers of the TV program **500** can be used in a process to generate content indications. As illustrated, there are two chapter level indications CH1 and CH2, two scene level indications SC2 and SC4, and three cut level indications C2, C7 and C12. The most detailed storyline description and the highest frequency of the indications is at the cut level. Each cut comprises one or many recognizable items that can be sources of information indications (e.g., an actor, an athlete, an article, or a location).

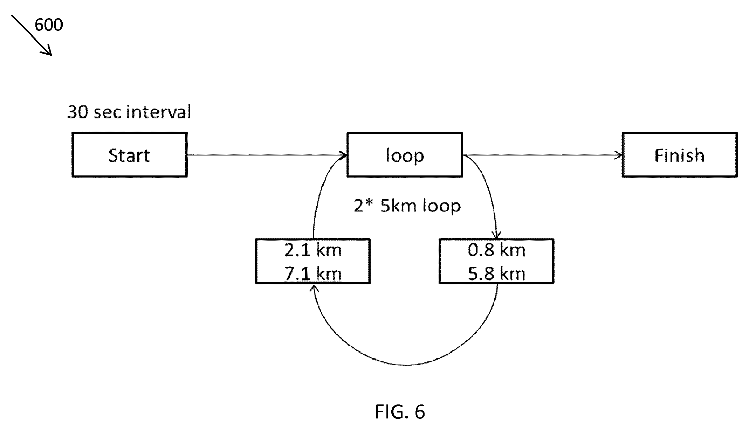

Referring now to FIG. 6, shown is an example of indication generation **600** in a cross-country ski competition, in accordance with an embodiment of the present disclosure. The cross-country ski competition is a 10 km race with two 5 km loops and an interval start with 30 sec intervals. In this competition, there are five source points for event indications: start, three split time points and finish. There are two split points in the loop, at 0.8/5.8 km and at 2.1/7.1 km. The corresponding timing system produces split times from 2.1 km, 5.8 km and 7.1 km. Two types of indications are generated for each source points: before and after the source points.

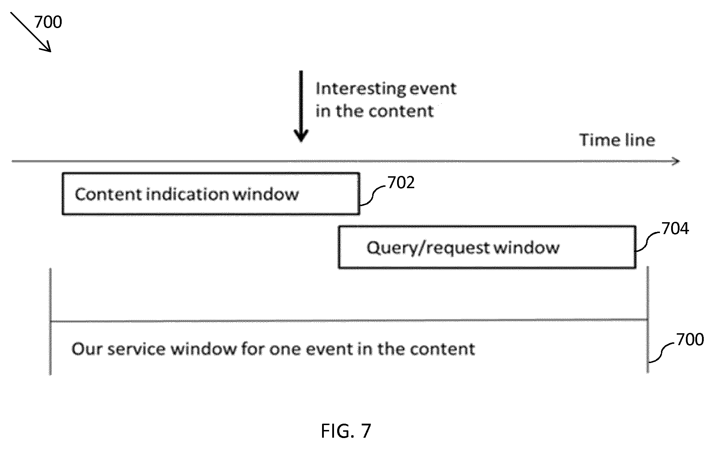

Referring now to FIG. 7, shown is an illustration of a service window **700** for an event, in accordance with an embodiment of the present disclosure. The event may be for example, an arrival of the athlete to a spilt time point. The service window **700** may include a content indication window **702** that is offered mainly before the event occurs; the details of the event (e.g., result at the split time point) and a query/request window **704** is offered mainly after the event occurs.

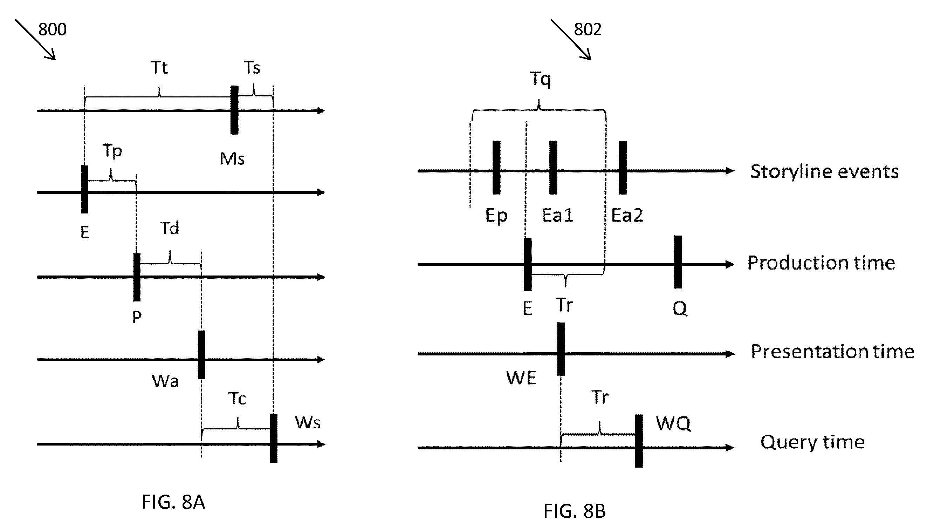

Referring now to FIG. 8A, shown is an illustration of main elements of an indication timing process **800,** in accordance with an embodiment of the present disclosure. The indication timing process illustrates various time points, E, P, Wₐ, Mₛ and Wₛ. At a time point E, an action occurs in, for example, an arrival of athlete to a split time point in a cross-country ski competition. A production time Tₚ elapses in capturing the action details from event management systems to the second screen server, processing the indication, encoding a PDU and sending the PDU in the second screen server. At time point P, the second screen server sends an event indication to the corresponding second screen application. A delivery time T_{d} is time elapsed in delivering the PDU from the second screen server to corresponding second screen application. At time point Wₐ, the second screen application receives the indication. An adjustment time T_{c} is time for which the second screen application holds the indication before presenting the indication. At presentation time point Wₛ, the second screen application presents the indication on the second screen. At time point Mₛ, the action occurs in content on the main screen such as TV. Thus, there is a time difference Tₛ between a presentation time point Mₛ of the action on the main screen and a presentation time point Wₛ of the respective indication on the second screen. An overall time Tt is time used in the main content production and its distribution to the TV screen, and is dependent on multiple factors such as coding method and networks used in the transport. In an embodiment, the second screen server system operates in a logical synchronization between Mₛ and Wₛ, wherein Tₛ can be negative or positive depending on a purpose and function of the indication. A case, where Tₛ = 0, is exceptional and not a necessary nor pre-condition for the operation.

Referring now to FIG. 8B, shown is an illustration of main elements of a query timing process **802,** in accordance with an embodiment of the present disclosure. The query timing process illustrates various time points, E, WE, WQ, Q, Ep, Ea1, and Ea2. At time point E, an indication is produced by the second screen server. At time point WE (local time in the second screen device), the indication is presented to the second screen application. After a lapse of response time Tᵣ, the viewer generates a query. At time point WQ (local time in the second screen device), the viewer's request is sent to the second screen server. Tq is a time window that is used in the response creation process (i.e. indication and storyline points that are used in the query), wherein a starting point is a virtual time of the original indication (E) and the window upper limit is at least E + Tr, where Tr is received from the second screen application by measuring Tr = WQ-WE.

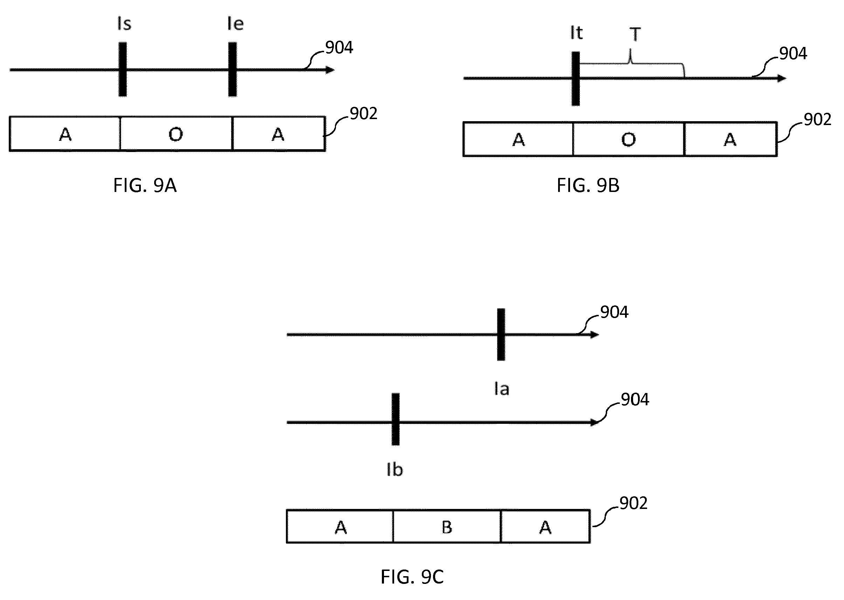

Referring now to FIG. 9A, shown is an exemplary illustration of generation of control indications when the viewer follows a single event, in accordance with an embodiment of the present disclosure. A viewer follows content 'A' on a main screen **902** such as a TV screen and receives related first and second indications I_{sµ} and I.e., at corresponding second screen **904,** such as a tablet. The first indication Iₛ informs that there is a break in the competition that the content A presents. Thus, the viewer may switch the main screen content to watch other content O. After a moment, the viewer may receive the second indication Iₑ informing about the end of the break. Thus, the viewer may switch the main screen content back to content A.

Referring now to FIG. 9B, shown is an illustration of generation of a control indication when the viewer follows a single event, in accordance with an embodiment.

The viewer follows content A on the main screen **902** such as the TV screen and receives an indication It at corresponding second screen **904,** such as a tablet. The indication It informs that there is a break in the competition that the content A presents. A counter (T) on the second screen **904** is activated to maintain the track of the break ending, and inform the user regarding the same. Indications as a control tool become even more valuable when the viewer follows multiple events at the same time by receiving indications from each of the followed events.

Referring now to FIG. 9C, shown is an illustration of generation of control indications when the viewer follows multiple events, in accordance with an embodiment of the present disclosure.

The viewer follows two events A and B simultaneously at the main screen **902,** and may swap the content on the main screen **902** when an interesting indication Iₐ/I_{b} arrives from event A or B on the second screen **904.** By following the indications Iₐ and I_{b}, the viewer can follow multiple events at the same time and watch the most interesting content on the main screen **902,** or the viewer can watch one event as primary and set other events as secondary and set preferences to watch only interesting snaps from the secondary events.

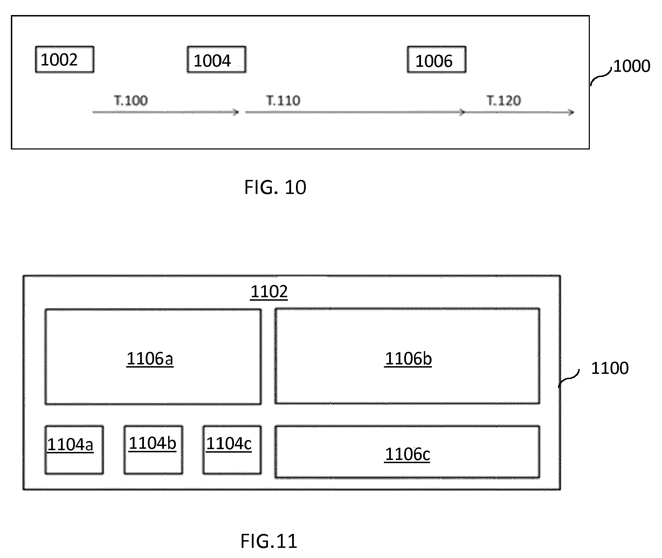

Referring now to FIG. 10, shown is an illustration of presentation of signals **1002, 1004** and **1006** at the second screen **1000** such as a tablet, in accordance with an embodiment of the present disclosure. Each signal is basically an indication having its own visibility time on the screen **1000.** The received signals **1002, 1004** and **1006** are presented on the second screen **1000** at times T.100, T.110, and T.120 respectively.

Referring now to FIG. 11, shown is an illustration of a display of a second screen **1100** such as a tablet, in accordance with an embodiment of the present disclosure.

The second screen **1100** displays a presentation area **1102,** in which each signal may present two types of touch control, system controls **1104a, 1104b,** and **1104c,** and signal controls **1106a, 1106b** and **1106c.** The system controls **1104a, 1104b,** and **1104c** are used in signalling from corresponding second screen application towards the corresponding second screen server, for example, in making update or query requests. The signal controls **1106a, 1106b** and **1106c** are received in signal attributes (e.g., a more info request or a more service request).

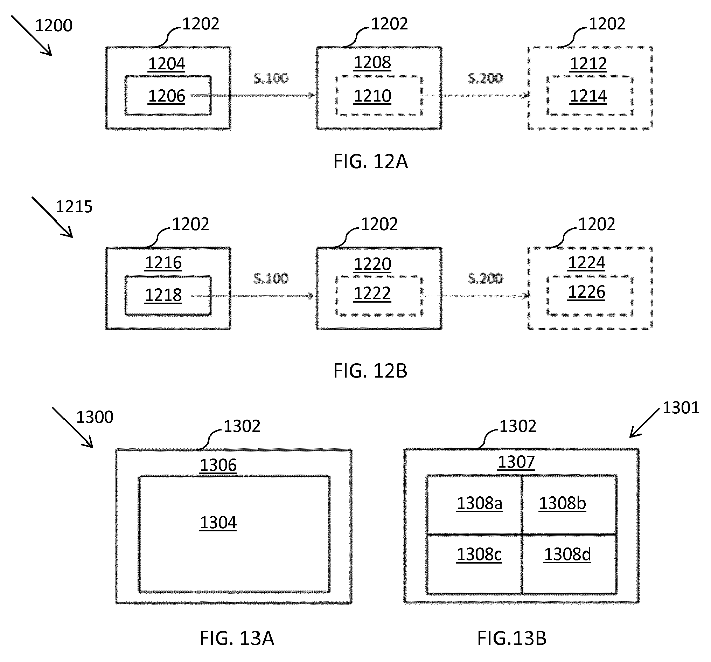

Referring now to FIG. 12A, shown is an illustration of a signal sequence **1200** that the viewer has initiated by touching a signal specific control of the second screen **1202** such as a tablet. The second screen illustrates a signal **1204** presented thereon, and a signal specific control activator area **1206.** Upon touching the signal specific control activator area **1206,** signalling S.100 is activated with the signal specific control, and a response signal **1208** is presented on the second screen **1202** containing another signal specific control activator area **1210.** Upon touching the signal specific control activator area **1210,** signalling S.200 is activated with the signal specific control, and a response signal **1212** is presented on the second screen **1202** containing yet another signal specific control activator area **1214.**

Referring now to FIG. 12B, shown is an illustration of a signal sequence **1215** that the viewer has initiated by touching a system control of the second screen **1202.** The second screen **1202** illustrates a signal **1216** presented thereon, and a system control activator area **1218.** Upon touching the system control activator area **1218,** signalling S.100 is activated with the system control, and a response signal **1220** is presented on the second screen **1202** containing another system control activator area **1222.** Upon touching the system control activator area **1222,** signalling S.200 is activated with the system control, and a response signal **1224** is presented on the second screen **1202** containing yet another system control activator area **1226.**

Referring now to FIG. 13A, shown is an illustration of a first signal viewing configuration **1300** in accordance with an embodiment of the present disclosure. In the first signal viewing configuration **1300,** the second screen **1302** presents a single signal **1304** on a presentation area **1306.**

Referring now to FIG. 13B, shown is an illustration of a second signal viewing configuration **1301,** in accordance with an embodiment of the present disclosure. In the second signal viewing configuration **1301,** the second screen **1302** presents first through fourth signals **1308a** till **1308d** simultaneously on a presentation area **1307.** Each of the first through fourth signals **1308a** till **1308d** is presented at the same time, each having their own presentation times. Although two signal viewing configurations are illustrated, multiple signal viewing configurations are possible.

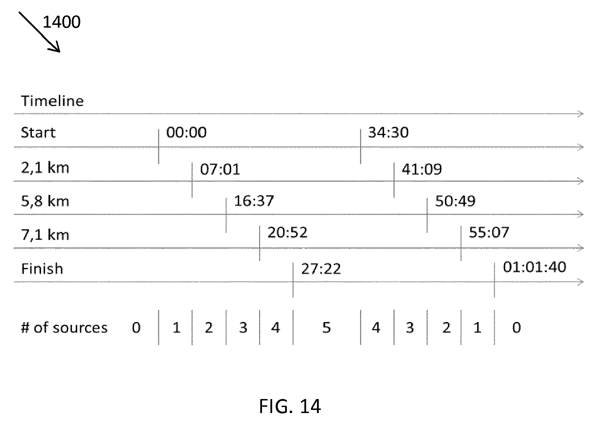

Referring now to FIG. 14, shown is an illustration of an event timeline **1400** in an example race, for example a cross-country skiing race of 10 km with 30 second start interval. The event timeline **1400** of the race includes time information, such as a first athlete starts at 00:00:00 and a last athlete starts at 00:34:30. The first athlete cuts a finish line at 00:27:22 and the last athlete cuts the finish line at 01:01:40. All the athletes cross three split time points thus the first and last split times arrive into the timing system from 2.1 km at 00:07:01, 00:41:09, from 5.8 km at 00:16:37, 00:50:49 and from 7.1 km at 00:20:52, 00:55:07. As shown, in the race, a number of simultaneous active locations vary from zero to five. The most active period is from 00:27:22 to 00:34:30. At this time period, a television program production has five alternative race locations from where to select a video content to the program.

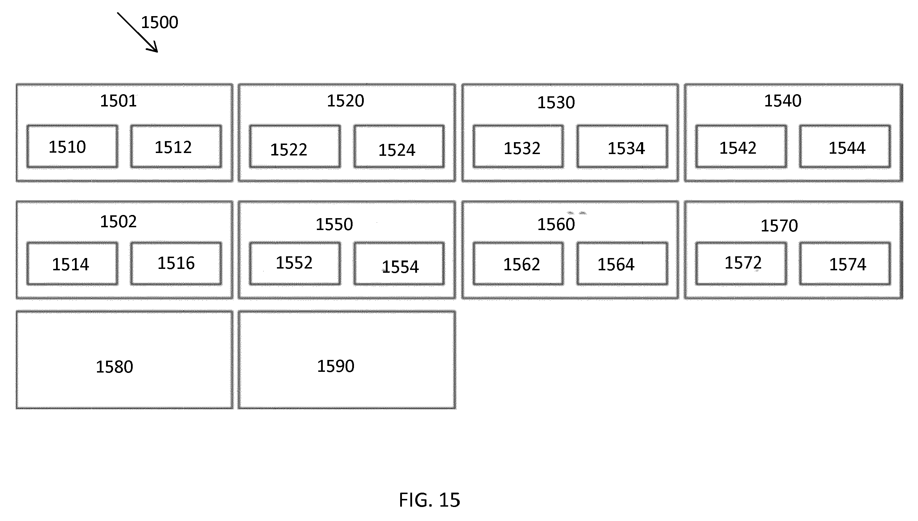

Referring now to FIG. 15, shown is an illustration of source alternatives **1500** for an event production system related to an example race, such as the example race of FIG. 14. The source alternatives **1500** includes two venue sources **1501** and **1502,** stadium landscape and attendants, both have, in this example, two views **1510, 1512** and **1514, 1516,** respectively. There are five race locations **1520, 1530, 1540, 1550** and **1560** (i.e., start, 2.1 km, 5.8 km, 7.1 km and finish) with two views each **1522** and **1524, 1532** and **1534, 1542** and **1544, 1552** and **1554,** and **1562** and **1564,** respectively. There is also a leader's chair **1570** with two views **1572, 1574.** Finally, there are also two systems, replay **1580** and result board **1590,** to play again instant occurrences or to fill silent periods of the race respectively.

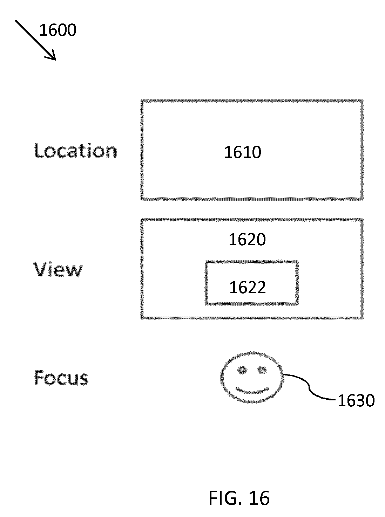

Referring now to FIG. 16, shown is an illustration of decision making steps **1600** of an event production system, for example the event production system of FIG. 15. The decision making steps **1600** includes simplification, i.e. a location **1610** is selected first, then a view **1620** and finally a focus **1630** to one athlete. The selection of the location **1610** and the view **1620** are logical as they are known alternatives, whereas the focus **1630** is an instant selection which relates to a moment of a race.

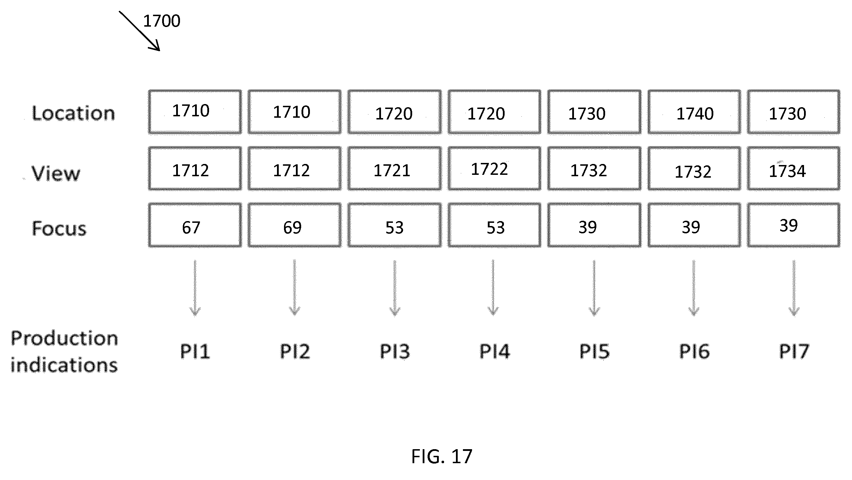

Referring now to FIG. 17, shown is an illustration of an example sequence **1700** to produce a television program for an example race, such as the example race of FIG. 14. The television program includes video contents from four locations **1710** (i.e. from 2.1 km), **1720** (i.e. from 5.8 km), **1730** (i.e. from 7.1 km) and a replay system **1740.** Further, each of the video contents presents respective views **1712, 1721, 1722, 1732** and **1732;** and presents selected athletes **67, 69, 53** and **39,** respectively. The television program production delivers production indications to second screen server, such as the second screen server system **200** of FIG. 2, each time where the video content switches i.e., **PI1**, **PI2, PI3, PI4**, **PI5, PI6** and **PI7.** A production indication, in this example, comprises three elements: location, view and focus e.g., **PI1** includes data elements **1710, 1712** and **67, PI3** includes **1720, 1721** and **53;** and **PI6** includes **1740, 1732** and **39.** The second screen server system uses the received flow of production indications in production methods of content indications.

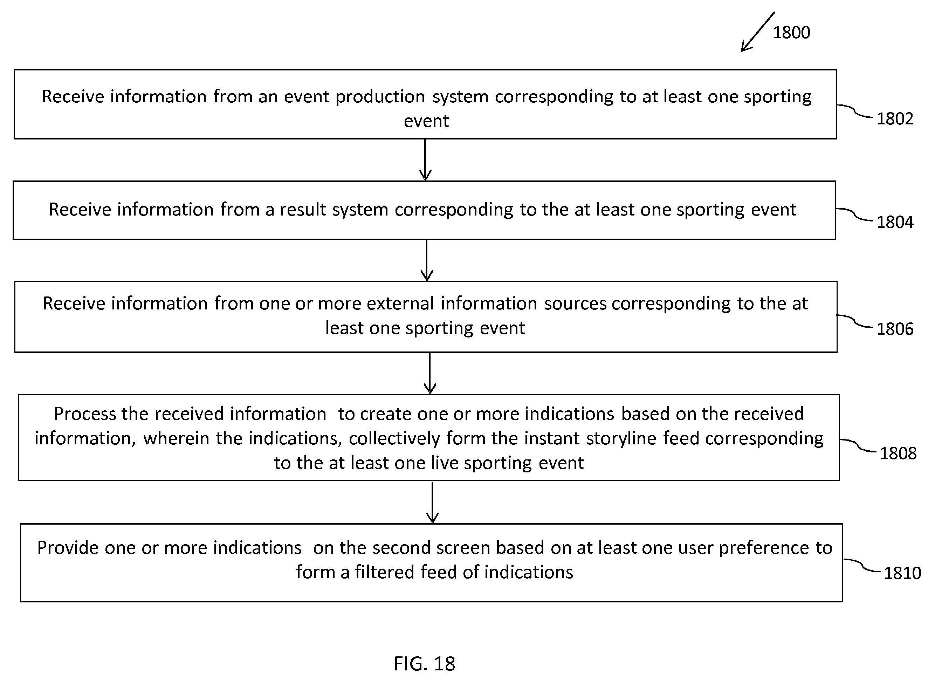

Referring now to FIG. 18, shown is steps of a method **1800** for generating an instant storyline feed of at least one live sporting event. Specifically, the method **1800** illustrates steps for generating an instant storyline feed of at least one live sporting event for a second screen, while the at least one live sporting event is displayed on a first screen, based on the exemplary environment **100** explained in conjunction with the FIG. 1.

At step **1802,** information is received from an event production system corresponding to at least one sporting event.

At step **1804,** information is received from a result system corresponding to the at least one sporting event.

At step **1806,** information is received from one or more external information sources corresponding to the at least one sporting event.

At step **1808,** the received information is processed to create one or more indications based on the received information, wherein the indications, collectively form the instant storyline feed corresponding to the at least one live sporting event.

At step **1810,** one or more indications are provided on the second screen based on at least one user preference to form a filtered feed of indications.

The steps **1802** to **1810** are only illustrative and other alternatives can also be provided where one or more steps are added, one or more steps are removed, or one or more steps are provided in a different sequence without departing from the scope of the claims herein.

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural.

## Claims

1. A system for generating at least one instant storyline feed of at least one live sporting event for a second screen, while the at least one live sporting event is displayed on a first screen, the system comprising:
a) a second screen server configured to:
receive information from an event production system corresponding to at least one sporting event;
receive information from a result system corresponding to the at least one sporting event;
receive information from one or more external information sources corresponding to the at least one sporting event; and
process the received information and create one or more indications based on the received information, wherein the indications, collectively form the instant storyline feed corresponding to the at least one live sporting event; and
b) a second screen application executing on the second screen for receiving and displaying the one or more indications thereon.

2. A system according to claim 1, wherein
the event production system provides information, corresponding to the at least one sporting event, comprises camera-stream mapping, camera positions, sub-event type, and displayed stream corresponding to the live sporting event;
the result system provides information, corresponding to the at least one sporting event, comprises split times, scoreboard, competitors, start order, name-number mapping, event related clock, and event related location corresponding to the live sporting event; and
the external information sources provides information, corresponding to the at least one sporting event, comprises regarding coaches, commentators, knowledge of experts, sport tactics, sponsors' information, performance of athletes corresponding to the live sporting event.

3. A system according to claim 1 or 2, wherein the at least one sporting event comprises biathlon; triathlon; cross-country skiing; nordic combined; marathon; cross-country running; orienteering; motor sports; soccer; cricket; baseball; basketball; ice hockey; golf; water sports; tennis; and track and field.

4. A system according to any of the preceding claims, wherein the indications comprise at least one of a content indication, a performance indication, an information indication, a control indication and a service indication.

5. A system according to claim 4, wherein the second screen server is configured to generate at least one of the content indication, the performance indication, the information indication, the control indication and the service indication from a source point of the at least one live sporting event.

6. A system according to claim 5, wherein the content indication comprises data elements corresponding to at least one of location, view, identity and focus from the source point of the at least one live sporting event.

7. A system according to any of the preceding claims, wherein the indications include control indications enabling the user to switch from the storyline feed corresponding to the at least one live sporting event on the second screen to another storyline feed corresponding to the at least one live sporting event.

8. A system according to claim 7, further comprising a second screen server system comprising the second screen server, the second screen application, system specific interfaces, and multitude of information sources, and optionallya production module configured to produce signalling; and a delivery network configured to transport the signalling between a delivery module and second screen application, wherein the signalling includes signal envelopes that carry instances of objects between elements of the second screen server system.

9. A system according to any of the preceding claims, wherein the second screen application filters the one or more indications based on at least one user preference to form a filtered feed of indications, and renders the filtered feed of indications on the second screen.

10. A system according to claim 9, wherein the at least one user preference comprises at least one of:
- information about type of the at least one sporting event;
- information about credentials of the athlete, wherein the credentials include at least name, team and nationality of the athlete; and
- information about the source point of the at least one sporting event.

11. A method for generating at least one instant storyline feed of at least one live sporting event for a second screen, while the at least one live sporting event is displayed on a first screen, the method comprising:
receiving information from an event production system corresponding to at least one sporting event;
receiving information from a result system corresponding to the at least one sporting event;
receiving information from one or more external information sources corresponding to the at least one sporting event;
processing the received information and create one or more indications based on the received information, wherein the indications collectively form the instant storyline feed corresponding to the at least one live sporting event; and
providing one or more indications on the second screen based on at least one user preference to form a filtered feed of indications.

12. A method according to claim 11, further comprising:
defining a rendering time for an indication to be provided on the second screen in accordance with a type of the indication and synchronization period for the indication with respect to the at least one live sporting event being displayed on the first screen; and
rendering the indication on the second screen based on the rendering time; and optionally comprising
defining priority for each indication; and
rendering the indication on the second screen in accordance with the priority of the indication.

13. A method according to claim 12, wherein rendering the indication on the second screen comprises at least one of:
rendering the indication on the second screen prior to the at least one live sporting event being displayed on the first screen;
rendering the indication on the second screen during the at least one live sporting event being displayed on the first screen; and
rendering the indication on the second screen after the at least one live sporting event being displayed on the first screen.

14. A method according to claim 12, further comprising receiving an input from the user regarding the priority for each indication

15. A method according to claim 11, further comprising:
receiving at least one spotting indication at the event production system;
replicating the at least one spotting indication; and
providing the at least one spotting function on the second screen in a distinct indication flow.
